# EUROPEAN PATENT APPLICATION

(11) **EP 2 338 742 A1**
(43) Date of publication of application: **29.06.2011**
(21) Application number: 10195388.3
(22) Date of filing: 16.12.2010
(51) Int. Cl.: B60R 16/037, B60R 25/00

(54) **User-specific personalization of vehicle functionality**

(30) Priority: 24.12.2009 US 647282
(71) Applicant: NXP B.V., 5656 AG Eindhoven (NL)
(72) Inventor: Nieuwland, Andre Krijn, 5656 AE, Eindhoven (NL); Matsinger, A.A.J., 5656 AE, Eindhoven (NL); Kourzanov, Petr, 5656 AE, Eindhoven (NL); Dajsuren, Yanja, 5656 AE, Eindhoven (NL)
(74) Representative: Krott, Michel

(57) **Abstract**

A system is described for personalization of vehicle operations. The system includes a smart card reader and a vehicle computer system. The smart card reader reads user-specific personalization information from a smart card corresponding to a user of the smart card within the vehicle. The vehicle computer system receives the user-specific personalization information from the smart card reader and implements user-specific functionality within the vehicle based on the user-specific personalization information.

## Description

Many countries are interested in lowering the number of deadly traffic accidents. However, establishing and enforcing traffic restrictions is difficult. In fact, it can be very difficult to establish and enforce traffic restrictions for particular driver groups, even though such driver groups are statistically more likely to cause or be involved in major accidents.

User customization of vehicle controls may help reduce the number and/or severity of accidents. However, the ability to customize vehicle controls for a particular user is very limited. In fact, most of the available forms of customization are vehicle-specific, meaning that the customization is performed for the vehicle, regardless of the preferences or abilities of the person who is driving the vehicle. This can have the opposite effect from what is intended, because each time a different person drives the same vehicle, the new driver may have to change the vehicle-specific customizations for his or her own use, which disrupts the customized settings established by previous drivers and, hence, defeats the ability to customize the vehicle controls.

A system is described for personalization of vehicle operations. The system includes a smart card reader and a vehicle computer system. The smart card reader reads user-specific personalization information from a smart card corresponding to a user of the smart card within the vehicle. In general, smart cards are pocket-sized cards with integrated circuits that hold one or more software applications. Some examples of user-specific personalization information include, but are not limited to, user-specific restrictions, user-specific preferences such as user-specific navigation preferences, user-specific road tolling permissions, user-specific medical data, and user specific social data. The vehicle computer system receives the user-specific personalization information from the smart card reader and implements user-specific functionality within the vehicle based on the user-specific personalization information. Some examples of hardware devices within the vehicle computer system include, but are not limited to, an on-board computer, an on-board communication device, and a navigation device.

Other aspects and advantages of embodiments of the present invention will become apparent from the following detailed description, taken in conjunction with the accompanying drawings, illustrated by way of example of the principles of the invention.
Fig. 1 depicts a schematic block diagram of one embodiment of a smart card system for a vehicle.
Fig. 2 depicts a schematic block diagram of one embodiment of the smart card of Fig. 1.
Fig. 3 depicts a schematic block diagram of one embodiment of the vehicle computer system of Fig. 1.
Fig. 4 depicts a schematic block diagram of another embodiment of the smart card system in which the smart card reader obtains user-specific personalization information from the smart card.
Fig. 5 depicts a flow chart diagram of one embodiment of a method of operation for the smart card system shown in Fig. 4.
Fig. 6 depicts a specific embodiment of the smart card system of Fig. 4 in which the smart card reader obtains user-specific restrictions and preferences from the smart card.
Fig. 7 depicts another specific embodiment of the smart card system of Fig. 4 in which the smart card reader obtains user-specific navigation preferences and road tolling permissions from the smart card.
Fig. 8 depicts another specific embodiment of the smart card system of Fig. 4 in which the smart card reader obtains user-specific medical data and social data from the smart card.

Throughout the description, similar reference numbers may be used to identify similar elements.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

While many embodiments are described herein, at least some of the described embodiments can help to lower the number of fatal and serious traffic accidents. At least some embodiments can provide a way to personalize vehicle operations based on a specific user. Personalizing vehicle operations for a specific user can have certain advantages over providing vehicle-specific or key-specific customization. Vehicle-specific customization refers to the use of customizable parameters that are set for the vehicle, regardless of who is driving or riding in the vehicle. Key-specific customization refers to the use of customizable parameters that are set for a specific key to a vehicle, regardless of who is using the key.

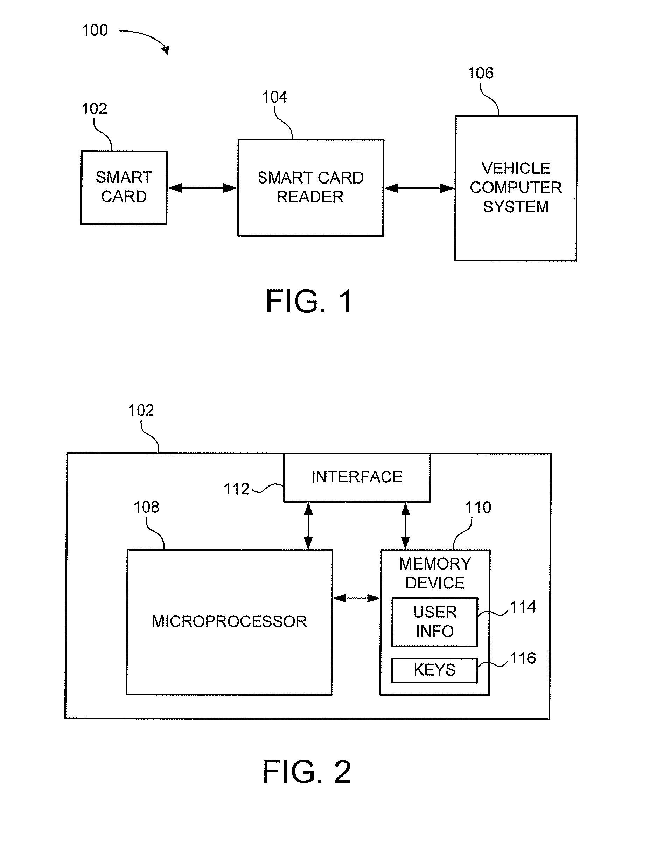

In some embodiments, the user-specific personalization functionality is made possible through the use of a smart card system. Fig. 1 depicts a schematic block diagram of one embodiment of a smart card system 100 for a vehicle (not shown). The illustrated smart card system 100 includes a smart card 102, a smart card reader 104, and a vehicle computer system 106. Other embodiments of the smart card system 100 may include more than one of any of these components.

In general, the smart card 102 stores data and/or a functional application that interfaces with the smart card reader 104. Some examples of these functional applications include user authentication, access control, credit and debit transactions, and so forth. However, the embodiments described herein are not limited to a particular type of data or application. One example of the smart card 102 is shown in Fig. 2 and described in more detail below.

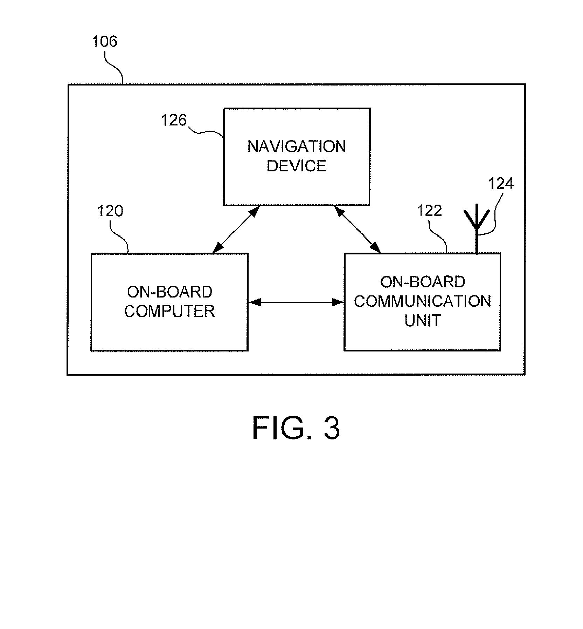

In general, the smart card reader 104 is one type of acceptance device, and other embodiments may use other types of acceptance devices, including devices to write new data and/or applications to the smart card 102. The smart card reader 104 reads (i.e., receives) information stored on or generated by the smart card 102. In one example, the smart card reader 104 reads data from the smart card 102 by making direct physical contact with the smart card 102. In other embodiments, the smart card reader 104 reads data from the smart card 102 via wireless radio frequency (RF) communications. For example, the smart card 102 may be an active device (i.e., with an internal battery or other power supply) or a passive device (i.e., powered by RF signals received from the smart card reader 104) and include a transceiver to generate wireless communication signals to transmit the data from the smart card 102 to the smart card reader 104. The smart card reader 104 also interfaces with the vehicle computer system 106 to coordinate user authentication and/or other data transactions. One example of the vehicle computer system 106 is shown in Fig. 3 and described in more detail below.

Fig. 2 depicts a schematic block diagram of one embodiment of the smart card 102 of Fig. 1. The illustrated smart card 102 includes a microprocessor 108, a memory device 110, and a communication interface 112. Although the smart card 102 is shown and described with certain components, other embodiments may include fewer or more components to implement less or more functionality. For example, in some embodiments, the smart card 102 may exclude the microprocessor 108, so that the smart card 102 is primarily a data storage device.

In general, the microprocessor 108 may function to execute software applications and process application instructions. The microprocessor 108 also may control the access to the data stored on the memory device 110. Additionally, the microprocessor 108 may control the communications with external devices, such as the smart card reader 104, via the communication interface 112. As mentioned above, the communication interface 112 may facilitate wired and/or wireless communications with the smart card reader 104 or other external devices.

In one embodiment, the memory device 110 of the smart card 102 stores user-specific information 114. The memory device 110 of the smart card 102 also may store keys 116 or other data used in authentication, authorization, encryption, or other similar operations. Other embodiments of the memory device 110 may include more or less data stored in the memory device 110. Additionally, the memory device 110 may be read-only or random-access memory and, further, may be at least partially incorporated within the microprocessor 108.

The user-specific information 114 may be unique to a specific person, referred to as the user of the smart card 102. In some circumstances, the user of the smart card 102 is also the owner of the smart card 102. However, in other circumstances, the user of the smart card 102 may be someone other than the owner of the smart card 102. For example a smart card may be owned by a parent, but the user-specific information 114 on the smart card may be specific to a different person such as a child. As another example, an employer may be the owner of the smart card 102, even though an employee uses the smart card 102 and the smart card 102 stores user-specific information 114 corresponding to the employee. In further embodiments, the smart card 102 may store owner-specific information in addition to the user-specific information 114. In another embodiment, the smart card 102 may store user-specific information 114 for two or more different users. In the case of storing information for more than one person on the smart card 102, the smart card reader 104 may include functionality to authenticate a particular user so that the smart card reader 104 accessed only the user-specific information 114 for the authenticated user.

Fig. 3 depicts a schematic block diagram of one embodiment of the vehicle computer system 106 of Fig. 1. In the illustrated embodiment, the vehicle computer system 106 includes an on-board computer 120, an on-board communication unit 122 with a transceiver 124, and a navigation device 126. Other embodiments of the vehicle computer system 106 may include less than all of the indicated components. Alternatively, other embodiments of the vehicle computer system 106 may include more components than are shown in Fig. 3.

In general, the on-board computer 120 facilitates general computer processing within the vehicle. In some embodiments, the on-board computer 120 monitors and controls safety systems, steering and breaking systems, transmission control systems, and other critical and/or non-critical vehicle systems. Additionally, in some embodiment, the on-board computer 120 processes all of the communications from the smart card reader 104 so that the on-board computer 120 provides an interface between the smart card reader 104 and the other components of the vehicle computer system 106.

The on-board communication unit 122 interfaces with the on-board computer 120 and the navigation device 126 to generate communication signals to and receive communication signals from external communication devices outside of the vehicle. For example, in some embodiments, the on-board communication unit 122 may generate vehicle diagnostics data and transmit that data via an antenna within the transceiver 124 to a vehicle technician. In other embodiments, the on-board communication unit 122 may facilitate communications with other types of signals. Furthermore, the on-board communication unit 122 is not limited to a particular type of communication medium, transmission protocol, or other communication parameter. Also, it should be noted that the communication channel between the on-board computer 120 and the on-board communication device 122 is excluded from some of the following figures for the sake of clarity. However such communications between the on-board computer 120 and the on-board communication device 122 may occur despite the absence of a specific illustration of the communication channel between the on-board computer 120 and the on-board communication device 122.

The navigation device 126 is capable of determining navigation locations and calculating navigation routes. In one embodiment, the navigation device 126 is implemented as a typical global positioning system (GPS) navigation device. The navigation device 126 can be integrated into the dashboard electronics of the vehicle or otherwise in communication with the on-board computer 120 and/or the on-board communication unit 122. In another embodiment, the navigation functionality can be implemented by an external device such as a user's mobile telephone having GPS or equivalent capabilities.

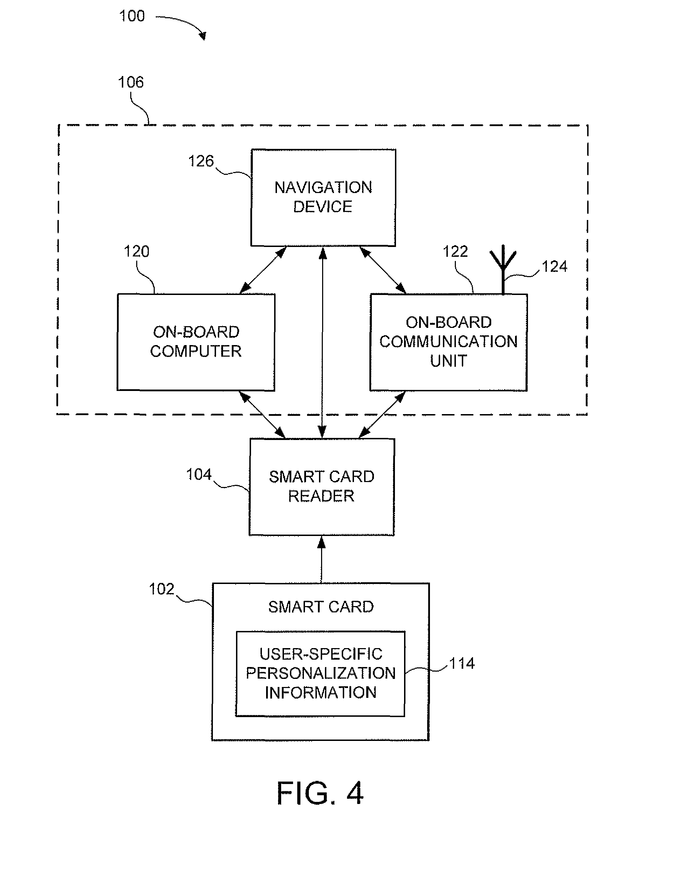

Fig. 4 depicts a schematic block diagram of another embodiment of the smart card system 100 in which the smart card reader 104 obtains user-specific personalization information 114 from the smart card 102. Thus, Fig. 4 combines many of the features shown in the previous Figs. 1-3 into a single illustration. In general, the smart card reader 104 reads some or all of the user-specific personalization information 114 from the smart card 102 and communicates the obtained information to one or more components of the vehicle computer system 106. In some embodiment, the smart card reader 104 sends the user-specific personalization information 114 to the on-board computer 120. In other embodiments, the smart card reader 104 sends the user-specific personalization information 114 to the on-board communication unit 122. In other embodiments, the smart card reader 104 sends the user-specific personalization information 114 to the navigation device 126. Additionally, in some embodiments, the smart card reader 104 may receive information and/or instructions from one or more of the on-board computer 120, the on-board communication unit 122, and the navigation device 126.

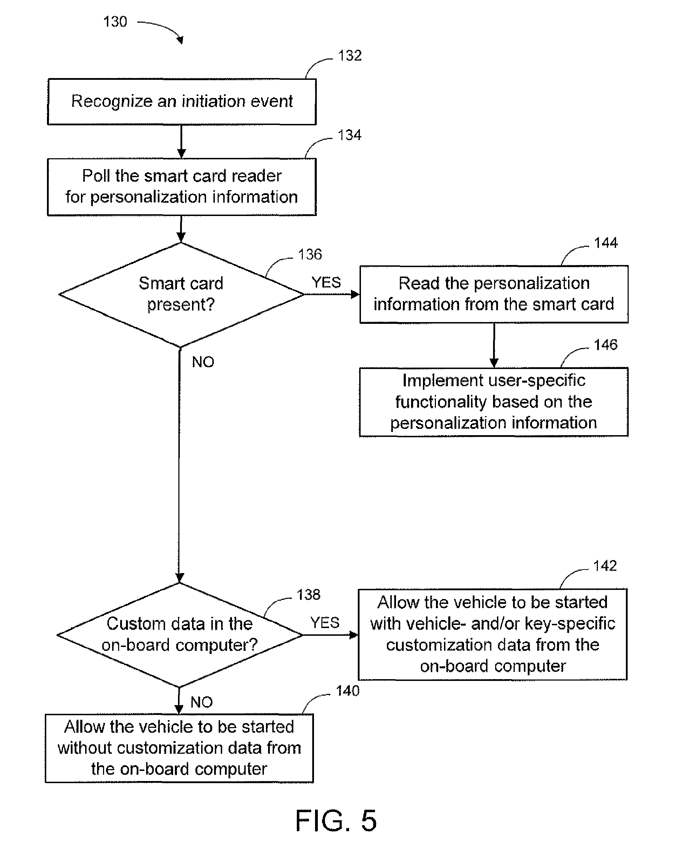

Fig. 5 depicts a flow chart diagram of one embodiment of a method 130 of operation for the smart card system 100 shown in Fig. 4. Although the method 130 is described in conjunction with the smart card system 100 of Fig. 4, embodiments of the method 130 may be implemented with other types of smart card systems.

At block 132, the vehicle computer system 106 recognizes an initiation event. The initiation event can be any type of occurrence which prompts for or may benefit from the user-specific personalization information 114 stored on the smart card 102. In a particular embodiment, the initiation event includes starting a vehicle. In another embodiment, the initiation event involves at least one of a recognizable number of events that might occur prior to a driver starting the vehicle. For example, some potentially recognizable events include unlocking or opening a car door, sitting in the driver seat, placing a key into the ignition, fastening a seatbelt or other passenger restraint system, or altering the position of the driver seat, external or internal mirrors, or the steering column, and so forth. In one embodiment, the initiation event is an electronic signal generated within the vehicle computer system 106 and communicated to the smart card reader 104, for example, based on one of the actions described above. Alternatively, the initiation event may be recognized by the smart card reader 104 directly.

At block 134, the vehicle computer system 106 polls the smart card reader 104 for user-specific personalization information. As noted above, the user-specific personalization information may be different from and independent of other customizable parameters that are tied to the vehicle and/or the ignition key, rather than to a specific user.

At block 136, the smart card reader 104 determines if there is a smart card 102 present within the vehicle. In one embodiment, the smart card 102 is present if the smart card 102 is in direct physical contact with the smart card reader 104. In another embodiment, the smart card 102 is present if the smart card reader 104 can detect the smart card 102 through wireless communications. The smart card reader 104 also may perform authentication operations to ensure that the proper user is present with the detected smart card 102 and/or to determine whether the detected smart card 102 is authorized for use with the vehicle.

If the smart card reader 104 does not detect a smart card 102 present, then at block 138 the on-board computer 120 determines if there is customization data in or accessible by the on-board computer 120. If there is no customization information available to the on-board computer 120, then at block 140 the on-board computer 120 coordinates with other components of the vehicle computer system 106 to allow the vehicle to start without any customization or personalization. In another embodiment, the vehicle computer system 106 could be configured to prevent starting the vehicle if no authorized users or smart cards 102 are detected. On the other hand, if the on-board computer 120 has access to customization data, then at block 142, the on-board computer 120 coordinates with other components of the vehicle computer system 106 to implement the customization and personalization indicated in the detected parameters of the customization data. For purposes of reference herein, the detected customization data accessible on or to the on-board computer 120 is considered vehicle- or key-specific data, because there is no personalization of such data to a particular user unless the user has previously taken the necessary time to program in personal settings, which may or may not be disrupted by other users.

Returning to block 136, if the smart card reader 104 determines that a smart card 102 is present, then at block 144 the smart card reader 104 reads some or all of the user-specific personalization information 114 from the smart card 102 for use in customizing or personalizing vehicle operations for that specific user. In one embodiment, the user-specific personalization information 114 from the smart card 102 may be used to identify the vehicle occupant status of the smart card user. For example, the user-specific personalization information 114 may be used, alone or in conjunction with other detectable parameters, to identify whether the user is the driver or a passenger within the vehicle. At block 146, the vehicle computer system 106 implements user-specific functionality based on the user-specific personalization information 114.

In some embodiments, it is possible that user-specific personalization information 114 exists on the smart card 102 and vehicle- and/or key-specific customization data exist on the on-board computer 120. In this case, the vehicle computer system 106 may use a combination of the user-specific personalization information 114 from the smart card 102 and the vehicle- and/or key-specific customization data from the on-board computer 120. In the event of a conflict between the user-specific personalization information 114 from the smart card 102 and the vehicle- and/or key-specific customization data from the on-board computer 120, one type of data may be designated to override the other type of data. For example, the user-specific personalization information 114 from the smart card 102 may override any conflicting vehicle- and/or key-specific customization data from the on-board computer 120.

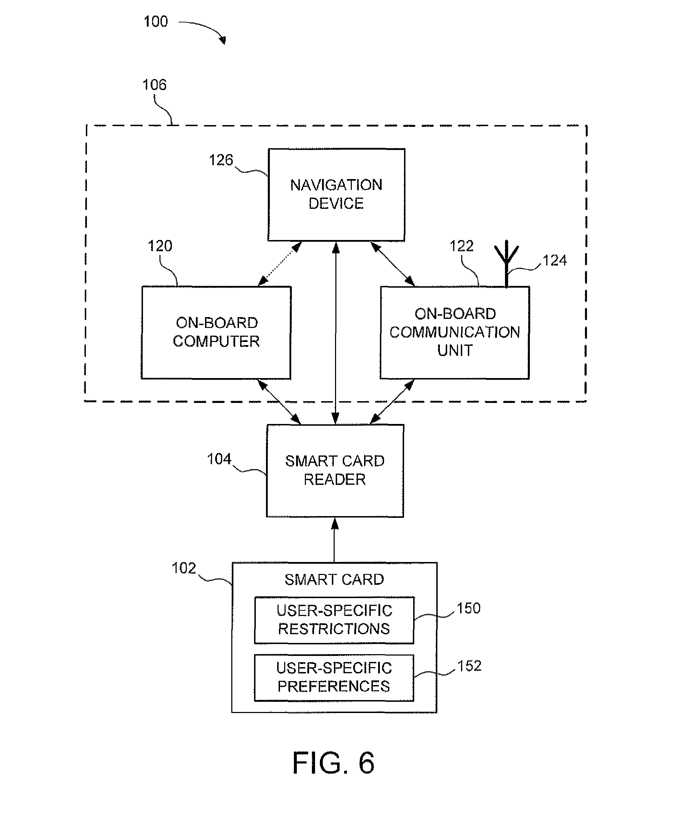

Fig. 6 depicts a specific embodiment of the smart card system 100 of Fig. 4 in which the smart card reader 104 obtains user-specific restrictions 150 and preferences 152 from the smart card 102. Thus, the user-specific personalization information 114 includes the user-specific restrictions 150 and the user-specific preferences 152. In some embodiments, the restrictions 150 place limitations on functionality of the vehicle, while the preferences are more of selections, rather than limitations. However, there is not necessarily a difference in some embodiments between the restrictions 150 and preferences 152. Additionally, in some embodiments, it may be possible for a third party, other than the user, to establish some or all of the user-specific restrictions 150 and/or preferences 152. For example, other people or entities (e.g., parents, governmental regulatory bodies) may have access to establish and manage some or all of the restrictions 150 and preferences 152 for a particular user.

By making user-specific restrictions 150 and preferences 152 available to the vehicle computer system 106 via the smart card reader 104, the vehicle computer system 106 can manage and personalize the operations of the vehicle to the parameters indicated in the user-specific restrictions 150 and preferences 152. Some examples of user-specific restrictions 150 and preferences 152 which might be implemented include, but are not limited to, the following: restrictions on driving areas; route planning; and control of performance settings such as throttle responsiveness, shifting moments, door locking, etc. By individualizing performance settings and storing these settings on the smart card 102, the vehicle can automatically adjust its settings to the preferences of the person driving it. In some embodiments, if a driver or other user of the vehicle violates one of the user-specific restrictions 150, then the vehicle may be capable of taking punitive actions such as shutting down or sending a communication to the proper authorities (i.e., the police).

In further embodiments, the smart card 102 may be implemented in an electronic driver license. In some embodiments, the smart card reader 104 is structurally integrated into the vehicle so that the smart card functionality cannot be removed or overridden. In some embodiments, the secret keys 116 stored on the smart card can be used to prevent unauthorized modifications to the user-specific restrictions 150.

Also, it should be noted that the illustrated embodiment does not necessarily require a direct communications link between the on-board computer 120 and the navigation device 126. Hence, the indicated communications link is shown dashed. More or less of the communications links may be optional, depending on the specific physical arrangement and/or communications scheme implemented in the vehicle computer system 106. In some embodiments, the vehicle equipment can include a biometrical analysis unit for use in certification that the driver is the same person as the authorized user of the smart card 102.

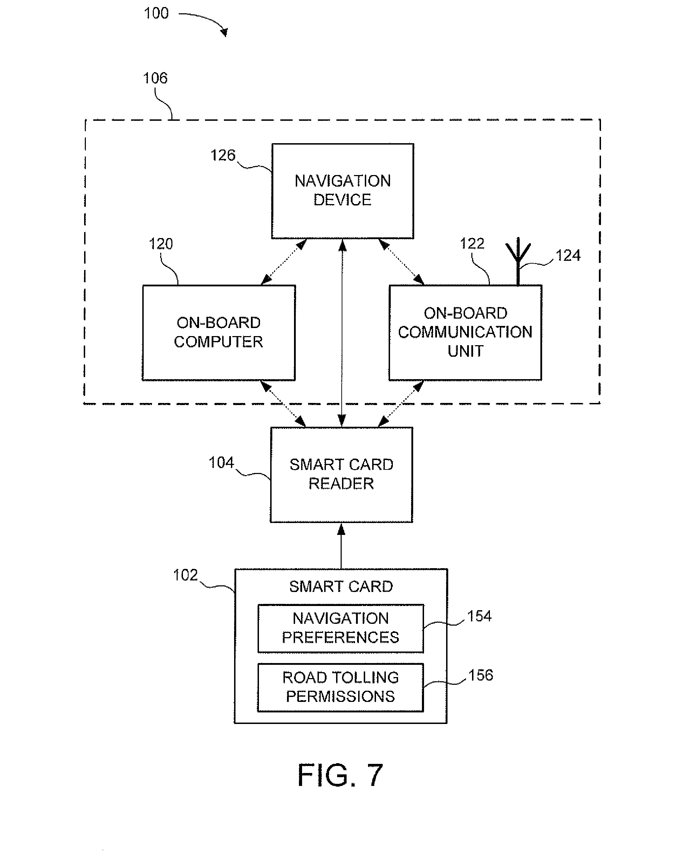

Fig. 7 depicts another specific embodiment of the smart card system 100 of Fig. 4 in which the smart card reader 104 obtains user-specific navigation preferences 154 and road tolling permissions 156 from the smart card 102. Thus, the user-specific personalization information 114 includes the user-specific navigation preferences 154 and road tolling permissions 156.

By making user-specific navigation preferences 154 and road tolling permissions 156 available to the vehicle computer system 106 via the smart card reader 104, the navigation device 112 is able to perform user-specific navigation (e.g., personalized route planning) as soon as the user-specific navigation preferences 154 are read from the smart card 102. In this way, a single navigation device 112 (or the same vehicle) can be shared by multiple users, and each user can experience his or her own personalized environment. Moreover, the same user uses different navigation device 104 (or different vehicles), each of navigation devices 112 can provide the same personalized look and feel and/or have the same personalized preferences as soon as the user-specific navigation preferences 154 are available from the smart card 102.

In a further embodiment, the use of user-specific navigation preferences 154 facilitates personalized route-selection optimization. Personalized route-selection optimization allows the user's preferences to automatically be taken into account when a new route is calculated and selected. In this way, a user may avoid certain areas that are subject to crime, traffic, or other conditions indicated by the user. The personalized route-selection optimization also may account for time of day so that the selected routes are selected based on time-dependent conditions such as, for example, during rush hour traffic. In some embodiments, such driving restrictions may be an enforced/imposed feature. The enforcement may be related to specific criteria (e.g., environmental conditions such as pollution, governmental conditions such as a court order restricting a person's access or proximity to other people, and so forth). In case of a violation, authorities may be informed via the on-board communication unit 122.

In this way, each member of a family or group who share the same vehicle(s) can have his or her own preferences easily implemented within the navigation device 114 without having to review and change another person's settings. Also, the user-specific navigation preferences 154 may be used in a dynamic way to direct certain classes of users along routes to avoid or reduce congestion problems such that less alert or less experienced drivers are not directed into intense driving conditions. The routing can also be based on traffic classes such as, for example, people who carpool or people who are willing to pay tolls for accelerated access. By using car-to-infrastructure communications, these types of re-routing policies can be enforced.

The road tolling permissions 156 facilitate, for example, user dependent road-tolling, automated kilometer registration, and driver-specific attribution of traffic violations. In situations where road-tolling is standard, the smart card 102 also may hold information on whether certain roads and/or driving conditions should be included or excluded for each individual driver or for different classes of users.

Moreover, if the smart card 102 has the form of an electronic driver license, some of the information (e.g., license number) available on the smart card 102 may be wirelessly observable outside the vehicle such that automated detection and ticketing of traffic violations (e.g., speeding, passing through red-light) can be coupled to the driver rather than to another occupant or the owner of the vehicle.

Another feature is the ability to the user-specific personalization data on the smart card 102 for kilometer registration for leased cars as requested by certain government entities. Another feature of the system could be to use the information on the smart card 102 for (wireless) access to restricted parking spaces (e.g., parking spaces reserved for specific types of people, etc.).

As another example, the smart card 102 may store user-specific personalization information related to private data/keys such as required for opening electric gates. In this way, the a user may store one or more "keys" to access to a gate for a house, a parking garage, or another type of secured vehicle facility. The private data/keys from the smart card 102 may be used by the on-board communication unit 122 to communicate the necessary information to the gate controller.

Also, it should be noted that the illustrated embodiment does not necessarily require direct communications links between the smart card reader 104 and the on-board computer 120, between the on-board computer 120 and the navigation device 126, between the smart card reader 104 and the on-board communication unit 122, and between the on-board communication unit 122 and the navigation device 126. Hence, the indicated communications links are shown dashed. More or less of the communications links may be optional, depending on the specific physical arrangement and/or communications scheme implemented in the vehicle computer system 106. In one embodiment, an optional communication link provided between the smart card reader 104 and the on-board communication unit 122 is used for road-tolling and/or traffic management purposes. The road tolling (or re-routing) can be done based on the permissions of the driver, rather than on the permissions of the vehicle. Also, the accounting (payment) for road usage can be done on the driver's account rather than on the vehicle owner's account. In some embodiments, the on-board communication unit can also communicate with road-side equipment (e.g., for detecting traffic violation such as red-light or speeding camera's) or automated parking-systems (to check whether the user is allowed to park at that location).

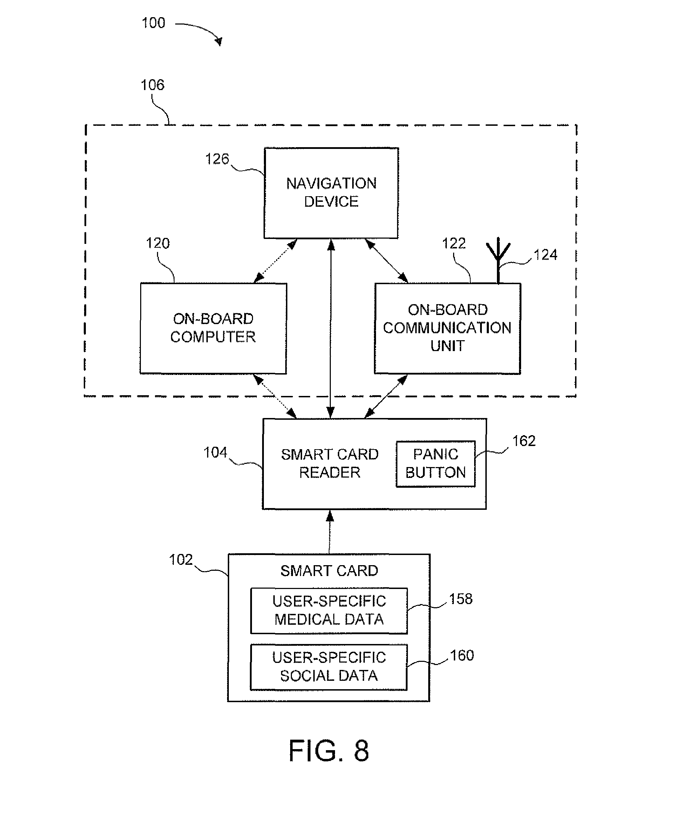

Fig. 8 depicts another specific embodiment of the smart card system 100 of Fig. 4 in which the smart card reader 104 obtains user-specific medical data 158 and social data 160 from the smart card 102. Thus, the user-specific personalization information 114 includes the user-specific medical data 158 and user specific social data 160.

By making the user-specific medical data 158 and user specific social data 160 available to the vehicle computer system 106 via the smart card reader 104, the vehicle computer system 106 can implement emergency calling services. For convenience, these emergency calling services may be referred as eCall services. In general, essential medical data can be obtained from the smart card 102 and transferred to emergency services when an automated emergency call is made after an accident or when a panic-button 162 has been pressed. Although the panic button 162 is shown as part of the smart card reader 104, the panic button 162 may be coupled to another part of the smart card system 100, for example, to one of the components within the vehicle computer system 106.

The availability of the user-specific medical data 158 may facilitate faster medical aid in the event of an emergency. In one embodiment, the medical data 158 includes information on the driver, blood type, known medical conditions, and information on current medications and/or allergic reactions to specific medications. Transmitting this information to medical personnel in transit to the scene of an accident can allow the medical personnel and emergency response team to plan ahead for special conditions, incorporating relevant medical conditions of the victim, ahead of arrival to the accident. This could increase the survival rate of the victims. If available on the smart card 102, a picture of the user may be transmitted with the user-specific medical data 158 for identification purposes.

The availability of the user-specific social data 160 may facilitate contacting a relative or other personal contact in case of emergency. The smart card 102 could also contain names and contact information (e.g., telephone number, address, email, etc.) of one or more people to be informed when something happens to the user of the smart card 102, which would make it easier to inform relatives after an accident.

Additionally, if GPS location information is available from the navigation device 126, then the GPS location information may be transmitted along with the medical and/or social data. Also, if driving parameters (e.g., speed, impact force and direction, etc.) are available from the on-board computer 120, then the driving parameters may be transmitted along with the medical and/or social data.

Also, it should be noted that the illustrated embodiment does not necessarily require direct communications links between the smart card reader 104 and the on-board computer 120, and between the on-board computer 120 and the navigation device 126. Hence, the indicated communications links are shown dashed. More or less of the communications links may be optional, depending on the specific physical arrangement and/or communications scheme implemented in the vehicle computer system 106.

While some examples of user-specific functionality are presented above, other embodiments may implement other types of user-specific functionality. For example, many dashboards include electronic displays, and some embodiments of electronic displays may be personalized based on the user-specific personalization information 114 from the smart card 102. Specifically, some of the dashboard functions which may be personalized include, but are not limited to, button positions within the display, which functions (e.g., radio controls, RPM counter, speedometer, etc.) to display, and what type of color scheme or design style is used for the display.

It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations as described herein

Embodiments of the invention can take the form of an entirely hardware embodiment, an entirely software embodiment, or an embodiment containing both hardware and software elements. In one embodiment, the invention is implemented in software, which includes but is not limited to firmware, resident software, microcode, etc.

Furthermore, embodiments of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Input/output or I/O devices (including but not limited to keyboards, displays, pointing devices, etc.) can be coupled to the system either directly or through intervening I/O controllers. Additionally, network adapters also may be coupled to the system to enable the data processing system to become coupled to other data processing systems or remote printers or storage devices through intervening private or public networks. Modems, cable modems, and Ethernet cards are just a few of the currently available types of network adapters.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A system for personalization of vehicle operations, the system comprising:
- a smart card reader within a vehicle to read user-specific personalization information from a smart card corresponding to a user of the smart card within the vehicle; and
- a vehicle computer system coupled to the smart card reader, the vehicle computer system to receive the user-specific personalization information from the smart card reader and implement user-specific functionality within the vehicle based on the user-specific personalization information.

2. The system of claim 1, wherein the user-specific personalization information from the smart card is independent of vehicle-specific information, and the vehicle computer system is configured to store the user-specific personalization information separately from the vehicle-specific information.

3. The system of claim 1, wherein the vehicle computer system is further configured to implement a user-specific restriction based on the user-specific personalization information from the smart card, wherein the user-specific restriction restricts an aspect of the vehicle operations.

4. The system of claim 3, wherein the vehicle computer system comprises a navigation device, and the navigation device is configured to restrict route selection based on the user-specific restriction.

5. The system of claim 3, wherein the vehicle computer system comprises an on-board communication unit, and the on-board communication unit is configured to generate a communication signal indicative of a violation of the user-specific restriction and to communicate the communication signal outside of the vehicle.

6. The system of claim 1, wherein the vehicle computer system is further configured to implement a user-specific preference based on the user-specific personalization information from the smart card, wherein the user-specific preference modifies a default parameter of the vehicle operations.

7. The system of claim 1, wherein the vehicle computer system comprises a navigation device, and the navigation device is configured to implement a personalized navigation environment for the user of the smart card based on the user-specific personalization information.

8. The system of claim 7, wherein the user-specific personalization information comprises a user-specific navigation preference, and the personalized navigation environment implements the user-specific navigation preference during selection of a navigation route.

9. The system of claim 8, wherein the personalized navigation environment implements the user-specific navigation preference during communication of a selected navigation route to the user.

10. The system of claim 7, wherein the personalized navigation environment implements a user-specific road tolling operation to ascribe a toll to the user based on identification of the smart card within a road tolling environment.

11. The system of claim 7, wherein the personalized navigation environment implements a user-specific traffic management operation to select a navigation route for the user based on a classification of the user.

12. The system of claim 7, wherein the personalized navigation environment implements a time-dependent operation dependent on a combination of the user-specific personalization information and a time of day of a particular navigation event.

13. The system of claim 1, wherein the vehicle computer system comprises an on-board communication unit, wherein the user-specific personal information comprises emergency personal information of the user of the smart card, and the on-board communication unit is configured to implement an emergency communication to communicate the emergency personal information of the user to an emergency responder in response to an emergency event.

14. The system of claim 13, wherein the emergency personal information comprises user-specific medical information of the user to indicate at least one user-specific medical condition of the user of the smart card.

15. The system of claim 13, wherein the emergency personal information comprises user-specific social information of the user to indicate a social contact to be contacted in response to the emergency event.
